# EUROPÄISCHE PATENTSCHRIFT

(11) **EP 3 782 415 B1**
(45) Veröffentlichungstag und Bekanntmachung des Hinweises auf die Patenterteilung: **28.01.2026**
(21) Anmeldenummer: 19718606.7
(22) Anmeldetag: 09.04.2019
(51) Int. Cl.: H04W 4/40, H04W 72/23

(54) **KOMMUNIKATIONSEINRICHTUNG, KONTROLLKOMPONENTE, VERFAHREN UND COMPUTERPROGRAMM ZUR KONFIGURATION EINER LOKALEN DRAHTLOSEN KOMMUNIKATION ZWISCHEN DER KOMMUNIKATIONSEINRICHTUNG UND EINEM FAHRZEUGNAHEN MOBILGERÄT**
COMMUNICATION DEVICE, CONTROL COMPONENT, METHODS AND COMPUTER PROGRAM FOR CONFIGURING LOCAL WIRE-FREE COMMUNICATION BETWEEN THE COMMUNICATION DEVICE AND A MOBILE DEVICE CLOSE TO A VEHICLE
DISPOSITIF DE COMMUNICATION, COMPOSANT DE CONTRÔLE, PROCÉDÉS ET PROGRAMME INFORMATIQUE POUR LA CONFIGURATION D'UNE COMMUNICATION LOCALE SANS FIL ENTRE LE DISPOSITIF DE COMMUNICATION ET UN APPAREIL MOBILE PROCHE D'UN VÉHICULE

(30) Priorität: 20.04.2018 DE 102018206068
(43) Veröffentlichungstag der Anmeldung: 24.02.2021
(73) Patentinhaber: Audi AG, 85045 Ingolstadt (DE)
(72) Erfinder: PLECHINGER, Jörg, 80469 München (DE); VOIGT, Christoph, 85092 Kösching (DE)
(74) Vertreter: RDL Patentanwälte PartG mbB
(86) Internationale Anmeldenummer: PCT/EP2019/058893
(87) Internationale Veröffentlichungsnummer: WO 2019/201664

(56) Entgegenhaltungen:
- WO-A1-2017/135881
- WO-A1-2017/135881
- HUAWEI ET AL: "Corrections to V2X in TS 36.300", vol. RAN WG2, no. Prague, Czech Republic; 20171009 - 20171013, 8 October 2017 (2017-10-08), XP051341997, Retrieved from the Internet <URL:http://www.3gpp.org/ftp/Meetings_3GPP_SYNC/RAN2/Docs/> [retrieved on 20171008]
- HUAWEI ET AL: "Corrections to V2X in TS 36.300", vol. RAN WG2, no. Prague, Czech Republic; 20171009 - 20171013, 8 October 2017 (2017-10-08), XP051341997, Retrieved from the Internet <URL:http://www.3gpp.org/ftp/Meetings_3GPP_SYNC/RAN2/Docs/> [retrieved on 20171008]

## Beschreibung

### Technisches Gebiet

Ausführungsbeispiele der vorliegenden Erfindung beziehen sich auf eine Kommunikationseinrichtung, eine Kontrollkomponente, eine Mobilstation, ein Fahrzeug, ein System, Verfahren und Computerprogramme zur Konfiguration einer lokalen drahtlosen Kommunikation zwischen der Kommunikationseinrichtung und einem fahrzeugnahen Mobilgerät. Insbesondere, aber nicht ausschließlich, werden für eine zellulare fahrzeugnahe Anwendung zusätzliche Frequenzbänder konfiguriert oder bereitgestellt.

### Hintergrund

Es ist bekannt für eine zellulare Fahrzeug zu Entität -C-V2X- (von engl. "cellular vehicle-to-everything communcation") Anwendung Kommunikationsprotokolle und ein Frequenzband bereitzustellen, die dem Austausch von Informationen zwischen bewegten Fahrzeugen und anderen Entitäten dienen. Diese Anwendung wird beispielsweise bei der Standardisierungsorganisation 3rd Generation Partnership Project (3GPP) standardisiert. Gemäß des Standards 3GPP TS (von engl. Technical Specification) 36.101 wird für diese Kommunikation ein Frequenzband bei 5,9 GHz (Band 47) bereitgestellt. Dieses Band ist für diesen Zweck reserviert und wird für den Mobilfunkbetrieb über stationäre Systemelemente wie Basisstationen, Netzwerk Controller oder dergleichen nicht verwendet, sodass keine gegenseitige Störung auftreten kann. Die C-V2X Anwendung betreibt das Band im Broadcast Mode (Rundfunkmodus), sodass die gesendete Information alle Empfänger in Reichweite aufnehmen können.

Für die Kommunikation in Fahrzeugen oder in deren Umgebung werden häufig vorhandene Systeme eingesetzt wie Bluetooth, Bluetooth Low Energy oder WiFi. Diese leiden jedoch unter dem Problem, dass das vorhandene Frequenzspektrum einerseits eingeschränkt ist und andererseits nicht sicher den Geräten zugeordnet werden kann. Zudem nutzen alle drei Technologien dasselbe Frequenzspektrum (ISM - Industrie, Wissenschaft und Medizin - Bänder bei 2.4GHz und 5.8GHz) in Konkurrenz zueinander. Dies führt dazu, dass die Kommunikation mit Hilfe dieser Technologien im Fahrzeug oder dessen Umgebung nicht immer uneingeschränkt möglich ist oder aber im schlimmsten Fall temporär komplett ausfallen kann, zum Beispiel in der Nähe von sehr vielen WLAN-Hotspots oder aber wenn viele Geräte gleichzeitig Interferenzen-verursachende Funktionen wie zum Beispiel Bluetooth-Paging ausführen.

Auch für das im zellularen Mobilfunk gestützte Verfahren des "Kolonne-Fahrens" von zum Beispiel Lastkraftwagen (Platooning) ist eine leistungsfähige und ungestörte Punkt-zu-Punkt Verbindung von hoher Bedeutung, insbesondere für Sicherheitsfunktionen.

Aus der US 8,514,825 B1 ist ein Verfahren bekannt, das das Verbinden eines Fahrzeugzugangsnetzwerks umfasst. Dieses umfasst eine kooperative Kommunikation zwischen mehreren On-Board-Einheiten in jeweiligen Fahrzeugen und ein Scannen des Fahrzeugzugangsnetzwerks, um eine Abdeckung von mindestens einem Infrastrukturzugangspunkt aufzunehmen.

Die DE 10 2014 117 360 B3 lehrt eine Vorrichtung, ein Verfahren und ein Computerprogramm für einen Anbindungs-Sendeempfänger eines Relay-Sendeempfängers in einem Mobilkommunikationssystem.

Die DE 102 43 826 A1 lehrt ein Empfangsteil für eine Funkzelle in einem Netzwerk mit einem Frequenzband von 1900 bis 2200 MHz, insbesondere in einem auf UMTS- oder IMT2000-Standard basierenden Netzwerk, in dem supraleitende Filter verwendet werden, um ein empfangenes Frequenzband in Teilbänder zu unterteilen. Jedem der supraleitenden Filter ist ein A/D-Wandler nachgeschaltet (untergeordnet), an dem die A/D-Wandler Schnittstellen aufweisen für die weitere Verarbeitung.

US 2017 / 0 289 733 A1 lehrt ein Benutzergerät (UE) und eine Basisstation (BS) in einem drahtlosen Kommunikationsnetz, bei dem die UE einen Empfänger umfasst, der konfiguriert ist, um mindestens eine semipersistente Scheduling (SPS) -Konfiguration aus einer Vielzahl von SPS-Konfigurationen von einer BS zu empfangen.

US 2018 I 0 098 322 A1 lehrt ein Verfahren, das das Empfangen von Ressourcenpool-Konfigurationsinformation auf einem mobilen Gerät umfasst. Die Ressourcenpool-Konfigurationsinformation umfasst seinerseits eine Bitmap zum Bestimmen des Ressourcenpools. Für einen Zeitraum mit mehreren aufeinanderfolgenden Subframes wird eine erste Submenge von Subframes bestimmt.

HUAWEI ET AL, 3GPP DRAFT, 36300_CR1062_(REL-14)__R2-1710098_CORRECTIONS TO V2X IN TS 36.300, lehrt Korrekturvorschläge für die TS 36.300, Version 14.4.0 bezüglich der V2X Kommunikation.

WO 2017/135881 A1 lehrt ein drahtloses Gerät, das von einem drahtlosen Netzwerkknoten zwei oder mehr semipersistente Scheduling-SPS-Konfigurationen empfängt, wobei jede der SPS-Konfigurationen mehrere periodische Übertragungsmöglichkeiten für das drahtlose Gerät definiert.

### Zusammenfassung

Die Erfindung wird durch die beigefügten unabhängigen Ansprüche definiert und weitere Ausführungsformen werden durch die abhängigen Ansprüche beschrieben.

### Figurenkurzbeschreibung

Ausführungsbeispiele werden nachfolgend bezugnehmend auf die beiliegenden Figuren näher erläutert. Es zeigen:
Fig. 1 ein System mit einem Beispiel eines Mobilgeräts, einem Ausführungsbeispiel einer Kommunikationseinrichtung und einem Ausführungsbeispiel einer Kontrollkomponente;
Fig. 2 ein Blockdiagram eines Ausführungsbeispiels eines Verfahrens für eine Kommunikationseinrichtung;
Fig. 3 ein Blockdiagram eines Ausführungsbeispiels eines Verfahrens für eine Kontrollkomponente;
Fig. 4 zeigt ein Blockschaltbild einer 2G/3G/4G/5G Kommunikationseinrichtung und eine separate Kommunikationseinrichtung für den C-V2X Betrieb;
Fig. 5 zeigt ein Blockschaltbild eines Ausführungsbeispiels einer Kommunikationseinrichtung für integrierten 2G/3G/4G/5G und C-V2X Betrieb; und
Fig. 6 zeigt ein detaillierteres Blockschaltbild eines Ausführungsbeispielseiner Kommunikationseinrichtung.

### Detaillierte Beschreibung

Verschiedene Ausführungsbeispiele werden nun ausführlicher unter Bezugnahme auf die beiliegenden Zeichnungen beschrieben. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hierin ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen abdecken sollen.

Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (zum Beispiel, "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer", "eine", "eines" und "der, die, das" auch die Pluralformen beinhalten, solange der Kontext nicht eindeutig etwas anderes angibt. Ferner sei klargestellt, dass die Ausdrücke wie zum Beispiel "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, zum Beispiel diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

Die hier und im Folgenden beschriebenen Komponenten werden als "ausgelegt, um" oder als "ausgebildet, um" eine gewisse Funktion durchzuführen oder zu erfüllen beschrieben, wobei diese Begriffe synonym verwendet werden und gegeneinander austauschbar sind. Dabei ist eine solche Komponente jeweils in der Lage die beschriebene Funktion auszuführen, weil beispielsweise entsprechende Software in einem Speicher vorhanden ist oder vorgehalten wird. So ist beispielsweise ein Kontrollmodul, das ausgelegt oder ausgebildet ist, um ein Sendeempfangsmodul zu steuern, und in programmierbarer Hardware implementiert ist, dahingehend auszulegen, dass entsprechende Steuersoftware zur Steuerung des Sendeempfangsmoduls vorhanden ist.

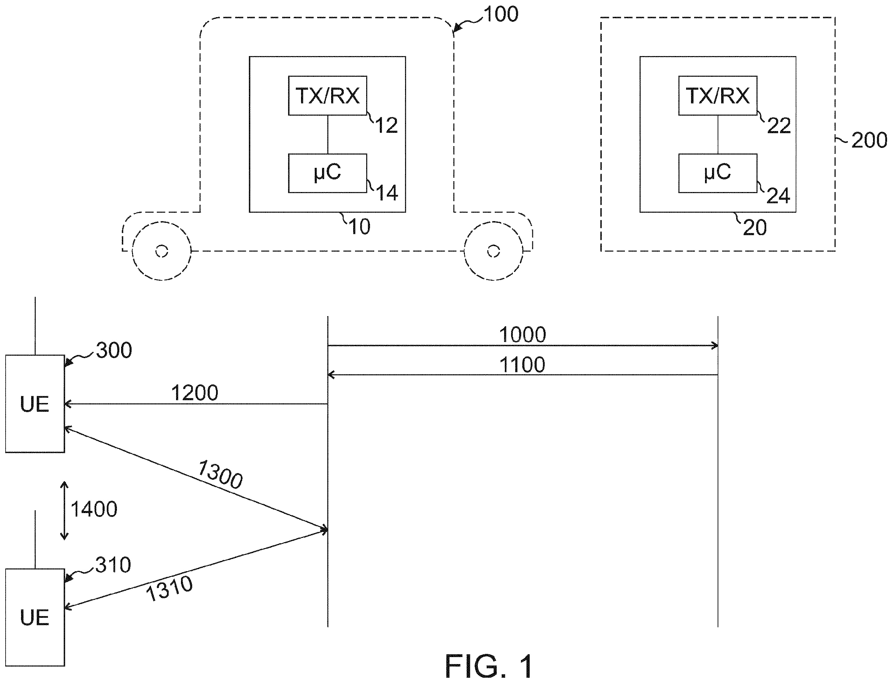

Fig. 1 illustriert ein Ausführungsbeispiel einer Kommunikationseinrichtung 10 zur Konfiguration einer lokalen drahtlosen Kommunikation zwischen der Kommunikationseinrichtung 10 und einem fahrzeugnahen Mobilgerät 300/310 oder zwischen fahrzeugnahen Mobilgeräten 300/310 eines Mobilfunksystems. Die Kommunikationseinrichtung 10 umfasst einen Sendeempfänger 12, der zur Kommunikation mit einer Kontrollkomponente 20 des Mobilfunksystems ausgebildet ist. Weiter umfasst die Kommunikationseinrichtung 10 ein Kontrollmodul 14, das mit dem Sendeempfänger 12 gekoppelt ist und zur Kontrolle des Sendeempfängers 12 ausgebildet ist. Das Kontrollmodul 14 ist ferner ausgebildet, um in dem Mobilfunksystem in einem ersten Frequenzband zu kommunizieren, um eine Konfiguration eines zweiten Frequenzbandes des Mobilfunksystems für die lokale drahtlose Kommunikation zu erhalten. Das Kontrollmodul 14 ist ferner ausgebildet, um die Konfiguration für die lokale drahtlose Kommunikation in dem zweiten Frequenzband an zumindest ein fahrzeugnahes Mobilgerät 300/310 des Mobilfunksystems weiter zu kommunizieren 1200.

In Ausführungsbeispielen kann die Kommunikationseinrichtung 10 zum Betrieb gemäß dem zellularen Fahrzeug zu Entität -C-V2X- Standard ausgebildet sein. Weiter kann in Ausführungsbeispielen die Kommunikationseinrichtung 10 in einem Fahrzeug 100 angeordnet sein. Ein weiteres Ausführungsbeispiel einer Mobilstation oder eines Fahrzeugs 100 mit einem Ausführungsbeispiel einer Kommunikationseinrichtung 10 ist in der Fig.1 ebenfalls gezeigt.

Fig. 1 zeigt ein Ausführungsbeispiel einer Kontrollkomponente 20 eines Mobilfunksystems zur Konfiguration einer lokalen drahtlosen Kommunikation zwischen einer Kommunikationseinrichtung 10 und fahrzeugnahen Mobilgeräten 300, 310 oder zwischen fahrzeugnahen Mobilgeräten 300, 310 eines Mobilfunksystems. Die Kontrollkomponente 20 umfasst einen Sendeempfänger 22, der zur Kommunikation mit der Kommunikationseinrichtung 10 des Mobilfunksystems ausgebildet ist und ein Kontrollmodul 24, das mit dem Sendeempfänger 22 gekoppelt ist und zur Kontrolle des Sendeempfängers 22 ausgebildet ist. Das Kontrollmodul 24 ist ferner ausgebildet, um in dem Mobilfunksystem in einem ersten Frequenzband zu kommunizieren und um eine Konfiguration eines zweiten Frequenzbandes des Mobilfunksystems für die lokale drahtlose Kommunikation zu übermitteln. Dies dient der Nutzung der Kommunikationseinrichtung mit zumindest einem fahrzeugnahen Mobilgerät 300, 310 oder zwischen fahrzeugnahen Mobilgeräten 300, 310. Eine Weiterleitung der Konfiguration für die lokale drahtlose Kommunikation in dem zweiten Frequenzband an zumindest ein fahrzeugnahes Mobilgerät 300, 310 des Mobilfunksystems ist vorgesehen. Weitere Ausführungsbeispiele sind eine Basisstation, ein Netzwerkkontroller und ein Netzwerkserver, die jeweils ein Ausführungsbeispiel der Kontrollkomponente 20 umfassen. In Ausführungsbeispielen können die Kontrollkomponenten des Mobilfunknetzes als Basisstation, als Netzwerk Controller und/oder als Server ausgebildet sein. Diese haben bei den 3GPP 2G-5G Standards verschiedene Funktionalität und verschiedene Anordnungen in der Netzkomponentenstruktur. Ein weiteres Ausführungsbeispiel ist ein System, beispielsweise ein Mobilkommunikationssystem, mit einer Kommunikationseinrichtung 10 und einer Kontrollkomponente 20.

In Ausführungsbeispielen kann ein Sendeempfänger 12, 22 typische Sendeempfängerkomponenten umfassen, wie einen oder mehrere rauscharme Verstärker (LNAs), einen oder mehrere Leistungsverstärker (PAs), einen oder mehrere Duplexer, einen oder mehrere Diplexer, einen oder mehrere Filter oder Filterschaltkreise, einen oder mehrere Wandler, einen oder mehrere Mischer, entsprechend angepassten Radiofrequenzkomponenten usw. Die Antennen können beliebigen Sende- und/oder Empfangsantennen entsprechen, wie Hornantennen, Dipolantennen, Patchantennen, Sektorantennen usw. Die Antennen können in einer definierten geometrischen Anordnung angeordnet sein, wie beispielsweise eine gleichförmige Anordnung, eine lineare Anordnung, eine kreisförmige Anordnung, eine dreieckige Anordnung, ein gleichförmiges Feld, eine Feldanordnung, oder Kombinationen dieser Anordnungen.

Das Kontrollmodul 14, 24 kann in Ausführungsbeispielen einem beliebigen Controller oder Prozessor oder einer programmierbaren Hardwarekomponente entsprechen. Beispielsweise kann eine Kontrolleinrichtung/-modul 14, 24 auch als Software realisiert sein, die für eine entsprechende Hardwarekomponente programmiert ist. Insofern kann ein Kontrollmodul 14, 24 als programmierbare Hardware mit entsprechend angepasster Software implementiert sein. Dabei können beliebige Prozessoren, wie Digitale Signal Prozessoren (DSPs) zum Einsatz kommen. Ausführungsbeispiele sind dabei nicht auf einen bestimmten Typ von Prozessor eingeschränkt. Es sind beliebige Prozessoren oder auch mehrere Prozessoren oder Mikrokontroller zur Implementierung des Kontrollmoduls denkbar. Es sind auch Implementierungen in integrierter Form mit anderen Kontrolleinheiten denkbar, beispielsweise in einer Kontrolleinheit für ein Fahrzeug, die zusätzlich noch ein oder mehrere andere Funktionen umfasst. Die hierin beschriebenen Verfahrensschritte können in Ausführungsbeispielen durch die Kontrollmodule 14, 24 bzw. durch die oder mittels der jeweiligen Sendeempfänger 12, 22 ausgeführt werden. Insofern sind beschriebene Verfahrensschritte durch die Vorrichtungskomponenten durchführbar. In Ausführungsbeispielen kann ein Kontrollmodul 14, 24 durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) realisiert sein.

In Ausführungsbeispielen ist ein Sendeempfänger, ein Mobilfunkgerät, oder ein Mobilgerät an ein Funksystem, ein Mobilfunksystem oder Mobilkommunikationssystem angepasst, in dem Sinne, dass es die zu einer diesbezüglichen Kommunikation erforderlichen Komponenten aufweist, wie beispielsweise Antennen, Filter, Verstärker, ein oder mehrere Prozessoren, Anzeige, etc. Solche Systeme umfassen beispielsweise Bluetooth, Wireless Local Area Network (WLAN), WirelessFidelity (WiFi), Mobilfunk, etc. Dabei kommen beispielsweise Mobilfunksysteme, die von entsprechenden Standardisierungsgremien, wie z.B. der 3rd Generation Partnership Project (3GPP)-Gruppe, standardisiert werden, in Betracht. Beispielsweise umfassen diese das Global System for Mobile Communications (GSM), Enhanced Data Rates for GSM Evolution (EDGE), GSM EDGE Radio Access Network (GERAN), das Universal Terrestrial Radio Access Network (UTRAN) oder das Evolved UTRAN (E-UTRAN), wie z. B. das Universal Mobile Telecommunication System (UMTS), Long Term Evolution (LTE) oder LTE-Advanced (LTE-A), System der fünften Generation (5G) oder auch Mobilfunksysteme anderer Standards, wie z. B. das Worldwide Interoperability for Microwave Access (WIMAX), IEEE802.16 oder Wireless Local Area Network (WLAN), IEEE802.11, sowie generell ein System, das auf einem Zeitbereichsvielfachzugriffsverfahren (auch engl. "Time Division Multiple Access (TDMA)"), Frequenzbereichsvielfachzugriffsverfahren (auch engl. "Frequency Division Multiple Access (FDMA)"), Kodebereichsvielfachzugriffsverfahren (auch engl. "Code Division Multiple Access (CDMA)"), Orthogonalen Frequenzbereichsvielfachzugriffsverfahren (auch engl. "Orthogonal Frequency Division Multiple Access (OFDMA)") oder einer anderen Technologie bzw. Vielfachzugriffverfahren basiert. Im Folgenden werden die Begriffe Mobilfunksystem, Mobilfunknetz, Mobilkommunikationssystem und Mobilfunknetzwerk synonym benutzt.

Im Folgenden wird angenommen, dass ein solches Mobilfunksystem zumindest einen stationären Sendeempfänger im Sinne einer Basisstation umfasst, der über Anbindung an den leitungsgebundenen Teil des Mobilfunknetzes verfügt. Auf der anderen Seite wird davon ausgegangen, dass das Mobilfunknetz zumindest einen mobilen Sendeempfänger (Mobilfunkgerät, Mobilfunkendgerät) umfasst, wobei sich der Begriff mobil hier darauf beziehen soll, dass mit diesem Sendeempfänger über die Luftschnittstelle, d. h. kabellos/schnurlos, kommuniziert wird. Ein solcher mobiler Sendeempfänger kann beispielsweise einem tragbaren Telefon, einem Smartphone, einem Tablet-Computer, einem tragbaren Computer, einem Fahrzeug oder einem Funkmodul entsprechen, das nicht zwingend mobil in dem Sinne ist, als dass es sich tatsächlich gegenüber seiner Umgebung bewegt. Der Sendeempfänger kann auch stationär sein (z.B. relativ zu einem Kfz), mit dem Mobilfunknetz jedoch drahtlos kommunizieren. Insofern kann die bereits erwähnte Basisstation einem der oben erwähnten Standards entsprechen, beispielsweise einer NodeB, einer eNodeB, usw.

Diesbezüglich sind Konzepte zur direkten Kommunikation zwischen Mobilfunkendgeräten bekannt, die beispielsweise auch mit D2D von engl. "device-todevice communication" bezeichnet werden. Aus der Standardisierung sind diesbezügliche Erweiterungen auf Kommunikation zwischen Fahrzeugen bekannt. Als Beispiele sind die 3GPP V2V (von vehicle-to-vehicle) Kommunikation als Teil des C-V2X Standards mit der PC5 Schnittstelle oder auch Car-to-Car Kommunikation mit der 802.11p Schnittstelle zu nennen. In Ausführungsbeispielen kann eines dieser Systeme zum Einsatz kommen und die Kommunikationseinrichtung 10, bzw. deren Sendeempfänger 12 und Kontrollmodul 14, entsprechend angepasst sein. Dies gilt analog für das infrastrukturseitige Kontrollmodule 20 mit seinen Komponenten.

In Ausführungsbeispielen kann ein Frequenzband zum Betrieb eines zellularen Mobilfunksystems geeignet sein. Es kann für unidirektionalen oder für bi-direktionale Kommunikation ausgelegt sein. Beispielsweise kann es in eine Aufwärtsverbindungs-(Uplink) und eine Abwärtsverbindungs- (Dowlink) Komponente bei verschiedenen Frequenzen aufgeteilt sein, wobei jedes Teilband eine gewisse Bandbreite haben kann, z.B. 5MHz, 10MHz, 50Mhz, 70 MHz, usw. Es kann für Rundfunkverkehr, den Verkehr zwischen ausgewählten Teilnehmern und/oder für den Punkt-zu-Punkt Betrieb ausgelegt sein. In Ausführungsbeispielen können Frequenzbänder nach dem 3GPP Plan vergeben werden, bei dem für C-V2X das Band 47 bei 5,9GHZ vorgesehen ist. Die Bänder können für den TDD (Time Division Duplex) oder den FDD (Frequency Division Duplex) Modus vorgesehen sein und gemäß PC5 Schnittstelle für Fahrzeuge gemäß C-V2X ausgebildet sein.

Die V2V Reichweite kann in Ausführungsbeispielen einige 100 Meter betragen, diese kann beispielsweise zwischen 350 und 700 Metern liegen. In Ausführungsbeispielen kann die direkte Kommunikation als Punkt-zu-Punkt Kommunikation ausgeführt sein, bei der der Signalaustausch zwischen den beteiligten Einheiten ohne Umwege über Dritte stattfindet. Ein fahrzeugnahes Mobilgerät kann sich innerhalb des Fahrzeuges oder in einem Umfeld um das Fahrzeug aufhalten, dessen Größe von der Reichweite der PC5 Schnittstellensignale bestimmt ist, die typisch einige 100 Meter beträgt, siehe oben. In Ausführungsbeispielen kann eine bidirektionale Kommunikation eine Datenübertragung in beide Richtungen einer Punkt-zu-Punkt Verbindung umfassen. Dabei können abwechselnd oder gleichzeitig in beide Richtungen Signale oder Informationen ausgetauscht werden. Mit anderen Worten ist der Gegenstand von Ausführungsbeispielen auch eine In-Fahrzeug Kommunikation mit Hilfe vom V2X Standard und deren Erweiterung.

In Ausführungsbeispielen kann eine Mobilstation als eine Kommunikationseinrichtung mit Zusatzkomponenten zur Sicherung einer vereinbarten Schnittstelle und Eigenschaften ausgebildet sein. So kann eine fahrzeugneutrale Schnittstelle festgelegt sein, die neben der Anordnung und Bedeutung einzelner Signale auch die Begrenzung von Stromverbrauch oder eine Mindest-Sendeleistung festlegt. Auch eine Steckverbindung zum Fahrzeug kann festgelegt sein. Die Eigenschaften können standardisiert sein. Das System kann als Summe aller Komponenten des Mobilfunksystems ausgeführt sein, das alle benötigten Funktionen und Einrichtungen zum Betrieb beinhaltet. Beispielsweise kann das System nach einem der 3GPP Standards 2G-5G ausgestaltet sein. In Ausführungsbeispielen können Mobilgeräte als tragbare Geräte wie Handys, Tabletts, Laptops, tragbare Computer oder als Funkmodul oder dergleichen ausgebildet sein. Sie können auch als Bestandteil von Kleidung, Accessoires, zum Beispiel als Brille, als Surf-stick oder dergleichen ausgebildet sein. Mobilgeräte, die auch Handheld-Geräte genannt werden, können auch Benutzern zugeordnet sein, wenn die Mobilgeräte die Benutzerdaten auch kommunizieren können.

Die Fig. 1 zeigt ein Ausführungsbeispiel eines Verfahrens für eine Kommunikationseinrichtung 10 zur Konfiguration einer lokalen drahtlosen Kommunikation 1300/1310/1400 zwischen der Kommunikationseinrichtung 10 und einem fahrzeugnahen Mobilgerät 300/310 oder fahrzeugnahen Mobilgeräten 300/310 eines Mobilfunksystems. Das Verfahren umfasst eine Kommunikation 1000/1100 in dem Mobilfunksystem in einem ersten Frequenzband zur Konfiguration eines zweiten Frequenzbandes des Mobilfunksystems für die lokale drahtlose Kommunikation. Weiter umfasst das Verfahren eine Kommunikation 1200 der Konfiguration für die lokale drahtlose Kommunikation in dem zweiten Frequenzband an zumindest ein fahrzeugnahes Mobilgerät des Mobilfunksystems.

In Ausführungsbeispielen kann die Kommunikation eine Anfrage 1000 der Kommunikationseinrichtung nach dem zweiten Frequenzband umfassen, und den Empfang einer Bestätigung 1100 einer Zuteilung des zweiten Frequenzbandes.

Weiter kann in Ausführungsbeispielen das fahrzeugnahe Mobilgerät 300/310 in einem Fahrzeug 100 angeordnet sein, oder außerhalb des Fahrzeugs 100 innerhalb einer Fahrzeug-zu-Fahrzeug -V2V-Kommunikationsreichweite einer PC5 Schnittstelle, beispielsweise in einem anderen Fahrzeug, angeordnet sein.

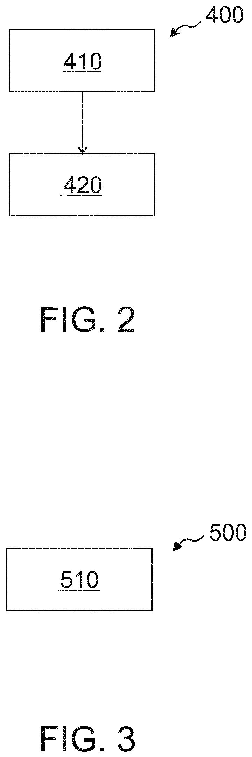

Weiter kann in Ausführungsbeispielen die Kontrollkomponente 20 des Mobilfunknetzes als Basisstation, als Netzwerk Controller und/oder als Server ausgebildet sein. Das Ausführungsbeispiel nach Fig. 2 zeigt ein Blockschaltbild eines Verfahrens für eine Kommunikationseinrichtung 10 zur Konfiguration einer lokalen drahtlosen Kommunikation zwischen der Kommunikationseinrichtung 10 und einem fahrzeugnahen Mobilgerät 300/310 oder fahrzeugnahen Mobilgeräten 300/310 eines Mobilfunksystems. Diese umfassen eine Kommunikation 410 in dem Mobilfunksystem in einem ersten Frequenzband zur Konfiguration eines zweiten Frequenzbandes des Mobilfunksystems für die lokale drahtlose Kommunikation. Weiter umfasst das Verfahren eine Kommunikation 420 der Konfiguration für die lokale drahtlose Kommunikation in dem zweiten Frequenzband an zumindest ein fahrzeugnahes Mobilgerät 300/310 des Mobilfunksystems.

Das Ausführungsbeispiel nach Fig. 3 zeigt ein Blockschaltbild eines Verfahrens 500 für eine Kontrollkomponente 20 des Mobilfunksystems zur Konfiguration einer lokalen drahtlosen Kommunikation zwischen einer Kommunikationseinrichtung 10 und fahrzeugnahen Mobilgeräten 300/310 oder zwischen fahrzeugnahen Mobilgeräten 300/310 eines Mobilfunksystems. Das Verfahren umfasst eine Kommunikation 510 in dem Mobilfunksystem in einem ersten Frequenzband zur Konfiguration eines zweiten Frequenzbandes des Mobilfunksystems für die lokale drahtlose Kommunikation von der Kommunikationseinrichtung mit zumindest einem fahrzeugnahen Mobilgerät 300/310 oder zwischen fahrzeugnahen Mobilgeräten 300/310 zur Kommunikation der Konfiguration für die lokale drahtlose Kommunikation in dem zweiten Frequenzband an zumindest ein fahrzeugnahes Mobilgerät 300/310 des Mobilfunksystems.

In einem weiteren Ausführungsbeispiel baut das Verfahren und die daraus abgeleitete Implementierung auf dem System zur Direktkommunikation mit Hilfe von C-V2X Kommunikation nach Release 14 3GPP Standard auf. Dieses System ist mit Blick auf Erhöhung der Verkehrssicherheit entwickelt worden. Damit nutzt es zur Kommunikation ein Message Broadcast System und ein Authentifizierungsbackend zur Sicherstellung der Verlässlichkeit der Informationen. Ausführungsbeispiele können dieses System erweitern. Beispielsweise nutzt der heutige 3GPP Release 14 Standard (TS 36.101 Section 5.5G) zur Übertragung der oben beschriebenen Broadcastinformationen ein harmonisiertes Frequenzband (ITS Band in Europa, DSRC Band in US, 3GPP Band47) um 5.9GHz, das in Ausführungsbeispielen dem zweiten Frequenzband entspricht. Der vorhandene 3GPP Standard basiert auf einem Message Broadcast System, demnach eine unidirektionale Kommunikation, die durch Ausführungsbeispiele auf bi-direktionale Kommunikation erweitert werden kann. So können in Ausführungsbeispielen die Sendeempfänger 12, 22 für die Nutzung des ersten und des zweiten Frequenzbandes ausgebildet sein.

In Ausführungsbeispielen kann das zweite Frequenzband als Rundfunkfrequenzband für direkte Kommunikation oder zur bi-direktionalen Kommunikation zwischen Mobilgeräten des Mobilfunksystems ausgebildet sein. Beispielsweise wird von einem Fahrzeug 100 aus, das ein Ausführungsbeispiel einer Kommunikationseinrichtung 100 umfasst, eine Anfrage zur Nutzung des zweiten Frequenzbandes 1000 an einen Netzwerk Controller 200 geschickt, der ein Ausführungsbeispiel der Kontrollkomponente 20 umfasst. Der Netzwerk Controller 200 kann nun das Frequenzband zuteilen 1100 und die Kommunikationseinrichtung 10 in dem Fahrzeug 100 kann nun das zweite Frequenzband nutzen. Beispielsweise kann die Nutzung des zweiten Frequenzbandes an zwei UEs oder Mobilfunkgeräte 300, 310 weitergegeben werden. Denkbar ist beispielsweise ein Szenario in einem Auto, Bus, Zug, etc., wobei die Kommunikationseinrichtung 10 in dem Fahrzeug fest installiert ist und die zweite Frequenzressource an Passagiere in dem Fahrzeug zur Nutzung (z.B. Video-Sharing, Spiele, usw.) weitergibt. In einigen Ausführungsbeispielen kann das zweite Frequenzband auch von der Kommunikationseinrichtung 10 selbst weiter genutzt werden, beispielsweise zur Rundfunkkommunikation mit anderen Fahrzeugen im Sinne der V2V Nachrichten. Insofern können auch weitere Fahrzeuge zur Nutzung des zweiten Frequenzbandes konfiguriert werden. Das Mobilgerät 300, 310 kann daher als tragbares Mobilgerät oder als im Fahrzeug installierte weitere Kommunikationseinrichtung ausgebildet sein.

Das Kontrollmodul 14 kann daher ausgebildet sein, um eine direkte Kommunikation zwischen der Kommunikationseinrichtung 10 und dem zumindest einen fahrzeugnahen Mobilgerät 300, 310 oder zwischen zumindest zwei fahrzeugnahen Mobilgeräten 300, 310 des Mobilfunksystems unter Verwendung des zweiten Frequenzbandes zu konfigurieren. Entsprechend können in Ausführungsbeispielen der Sendeempfänger 12 und/oder das Kontrollmodul 14 ausgelegt sein, um dem zumindest einen Mobilgerät 300, 310 in seinem Umfeld die Nutzung von Diensten (Sprach-und Datendienste) des Mobilfunksystems zu ermöglichen. Die Nutzung von Frequenzen der Mobilfunkbetreiber für In-Fahrzeug Kommunikation kann die Anbindung von Diensten der Mobilfunkbetreiber erlauben.

Die im 3GPP Standard schon vorhandene Übertragung über abgesicherte Verbindung (Verschlüsselung/Encryption, Authentification/Authentifizierung) kann auch erlauben, die Kommunikation sensitiver Inhalte und Betrieb systemkritischer Funktionen über eine Funkschnittstelle durchzuführen. In Ausführungsbeispielen kann das erste und das zweite Frequenzband des zellularen Mobilfunkstandards vom 3GPP LTE Standard genutzte Frequenzbänder umfassen. Ein Absicherungsmittel für die bidirektionale Kommunikation kann entsprechend eine Authentifizierungsfunktion und/oder eine Verschlüsselungsfunktion umfassen. Dabei kann zumindest in einigen Ausführungsbeispielen das Kontrollmodul 14 ausgebildet sein, um eine zeitlich und/oder örtlich begrenzte Vereinbarung von Zertifikaten zur Absicherung der Kommunikation zu ermöglichen. Generell kann die Kommunikationseinrichtung 10 in Ausführungsbeispielen ein Absicherungsmittel für eine bidirektionale Kommunikation, eine Authentifizierungsfunktion und/oder eine Verschlüsselungsfunktion umfassen.

Wie anhand der Fign. 1-3 erläutert schaffen Ausführungsbeispiele Verfahren und Implementierungen, um ggf. auch vorhandene Kommunikationshardware vorteilhaft zur Kommunikation innerhalb eines Fahrzeugs 100 oder in dessen Umgebung einsetzen zu können. Vorhandene Systeme zur Kommunikation im Fahrzeug wie Bluetooth, Bluetooth Low Energy oder WiFi können unter dem Problem leiden, dass das vorhandene Frequenzspektrum einerseits eingeschränkt ist und andererseits nicht sicher den Geräten zugeordnet werden kann. Zudem nutzen alle drei Technologien dasselbe Frequenzspektrum (ISM Bänder 2.4GHz und 5.8GHz) in Konkurrenz zueinander. Dies führt dazu, dass die Kommunikation mit Hilfe dieser Technologien im Fahrzeug nicht immer uneingeschränkt möglich ist oder aber im schlimmsten Fall temporär komplett ausfallen kann. Zum Beispiel in der Nähe von sehr vielen WLAN-Hotspots (Wireless Local Area Network) in Zentren oder aber wenn viele Geräte gleichzeitig Interferenzen-verursachende Funktionen wie zum Beispiel Bluetooth-Paging ausführen. Damit sind Anwendungen mit sehr hoher Datenrate, wie zum Beispiel Video Streaming zu mehreren Clients mit unterschiedlichem Inhalt oder Anwendungen der Virtual Reality im Fahrzeug nicht implementierbar. In Ausführungsbeispielen können die Clients als Software-Applikationen -APPS- auf einem Mobilgerät 300, 310 ausgeführt sein.

In Ausführungsbeispielen kann das Verfahren und die daraus abgeleitete Implementierung auf dem zukünftigen System zur Direktkommunikation mit Hilfe von C-V2X Kommunikation nach Release 14 des entsprechenden 3GPP Standards aufbauen. Dieses System ist mit Blick auf Erhöhung der Verkehrssicherheit entwickelt worden. Der 3GPP Release 14 Standard (TS 36.101 Section 5.5G) nutzt zur Übertragung der oben beschriebenen Broadcastinformationen ein harmonisiertes Frequenzband (ITS (Intelligent Transportation Systems) Band in Europa, DSRC (Distributed Routing and Centralized Scheduling) Band in USA, 3GPP Band 47 um 5.9GHz. Ausführungsbeispiele können diese Nutzbarkeit von V2X Kommunikation auf andere 3GPP Frequenzbänder erweitern. Z.B. Band 41 (2600MHz), Band 42 (3500MHz) oder Band 43 (3700MHz). In Ausführungsbeispielen kann das zweite Frequenzband beispielsweise bei 900 MHz, 1900MHz, 2600MHz, 3500MHz oder 3700MHz angeordnet sein.

Bei Benutzung von Frequenzbändern, die der Lizenzierung unterliegen, wird der Lizenzgeber in das System mit einbezogen. Die im Standard schon vorhandene Möglichkeit des Frequenzmanagements des Bands 47 durch die Mobilfunknetzbetreiber, auch Operator genannt, kann in Ausführungsbeispielen zur Aushandlung der zeitlich oder räumlich beschränkten Nutzung mit limitierter Leistung von lizenzierten Frequenzen genutzt werden. In Ausführungsbeispielen kann die Nutzung des zweiten Frequenzbandes des zellularen Mobilfunkstandards in der zulässigen Sendeleistung, zeitlich und/oder räumlich beschränkt sein. Der Kontrollkomponente 20 bzw. dem darin befindlichen Kontrollmoduls 24 kann dadurch die Möglichkeit einer Ressourcenüberwachung, einer Ressourcenplanung, und einer Ressourcenverwaltung gegeben werden.

In einigen weiteren Ausführungsbeispielen ist es auch denkbar mit einer Subskription zu einem bestimmten Operator oder Betreiber mit diesem vorab eine Vereinbarung zu treffen, beispielsweise um mit reduzierter Sendeleistung Teile von dessen LTE Frequenzen für In-Fahrzeugkommunikation zu nutzen. Diese Teile des LTE Spektrums können dann zur Kommunikation der Kommunikationseinrichtung 20 und einem fahrzeugnahen Mobilgerät 300 oder zur Kommunikation zwischen fahrzeugnahen Mobilgeräten 300, 310 verstanden werden. In Ausführungsbeispielen kann durch eine vorangegangene Subskription bei einem zellularen Mobilfunkanbieter das zweite Frequenzband vorbestimmt sein. In Ausführungsbeispielen kann eine Subskription einer Lizenz zur Nutzung entsprechen, hier einer Lizenz zur Nutzung eines Frequenzbandes oder eines Teils eines Frequenzbandes eines Operators, beispielsweise für den C-V2X Betrieb. Die Lizenz kann zeitlich, örtlich oder bezüglich der maximal erlaubten Sendeleistung oder auch Uhrzeit spezifiziert sein.

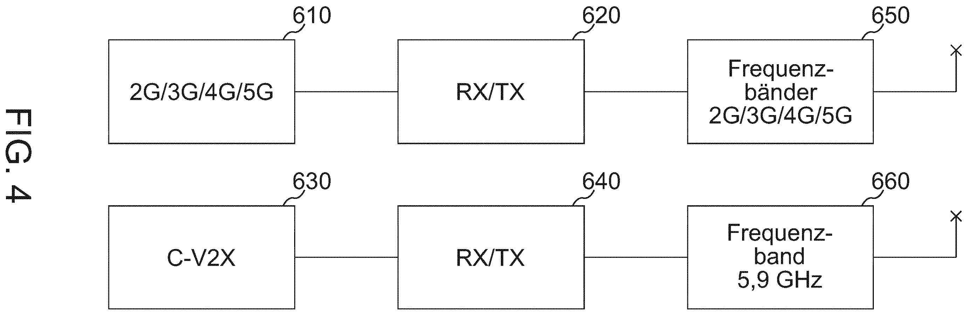

Die dazu benötigte Veränderung des Hardware Designs der V2X Kommunikationseinheit lässt sich vereinfacht durch eine oder mehrere zusätzliche Filter und Signalverstärker implementieren. Dies soll anhand der Fign. 4, 5 und 6 näher erläutert werden. Fig. 4 zeigt eine Kommunikationseinrichtung für den zellularen Mobilfunk nach Standards der 2. - 5. Generation (2G-5G), wie sie beim 3rd Generation Partnership Project -3GPP- standardisiert sind. Diese Kommunikationseinrichtung umfasst ein digitales Modem 610 zur digitalen Verarbeitung der zu sendenden und empfangenen Signale gemäß den entsprechenden Standards. Das digitale Modem 610 ist verbunden oder gekoppelt mit einem Sendeempfänger 620, der die hochfrequenzmäßige Verarbeitung des Modemsignals und der empfangenen Signale durchführt. Der Sendeempfänger 620 ist seinerseits mit dem Frontend 650 verbunden, in dem Filterelemente für die Filterung der HF (Hochfrequenz) Bänder der Standards der genannten 2. - 5. Generation gemäß 3GPP sowie entsprechende Verstärker (PAs, LNAs) vorgesehen sind.

Davon separiert ist eine Kommunikationseinrichtung für C-V2X gezeigt, die entsprechende Komponenten umfasst. So dient das digitale Modem 630 der digitalen Verarbeitung der zu sendenden und empfangenen Signale gemäß dem C-V2X Standard. Das digitale Modem 630 ist verbunden mit einem Sendeempfänger 640, der die hochfrequenzmäßige Verarbeitung des Modemsignals und der empfangenen Signale durchführt. Der Sendeempfänger 640 ist seinerseits mit dem Frontend 660 verbunden, in dem Filterelemente für die Filterung sowie entsprechende Verstärker für das Frequenzband des C-V2X Standards vorgesehen sind.

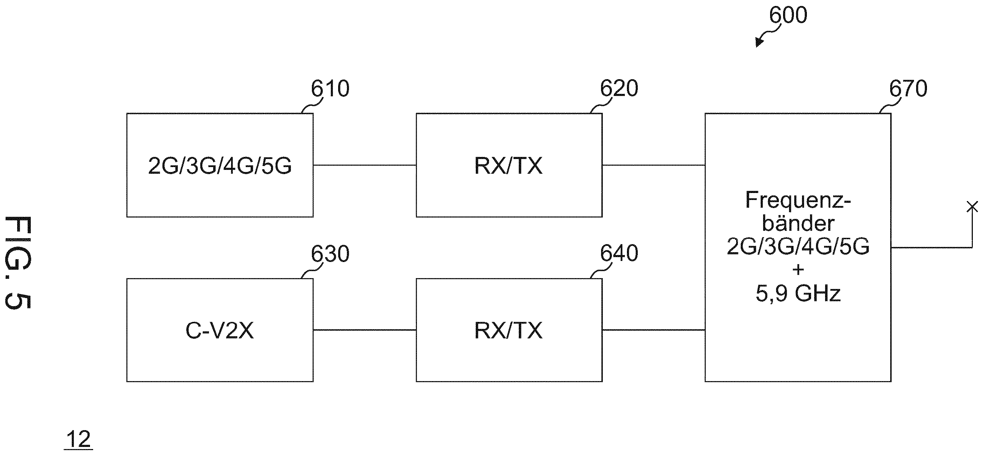

Das Ausführungsbeispiel nach Fig. 5 zeigt einen Sendeempfänger 12 einer Kommunikationseinrichtung 10. Die Komponenten 610, 620, 630 und 640 haben dabei die bei Fig. 4 beschriebenen Funktionen. Abweichend von Fig. 4 existiert in diesem Ausführungsbeispiel jedoch nur ein Frontend 670, das für alle Frequenzbänder ausgelegt ist. Dem zu Folge können Signale der Frequenzbänder gemäß der Standards der 2. - 5. Generation des zellularen Mobilfunks auch für den C-V2X Standard verwendet werden. Dabei sind in dem Frontend 670 die für das Frequenzband des C-V2X zusätzliche Filter und Verstärker vorgesehen.

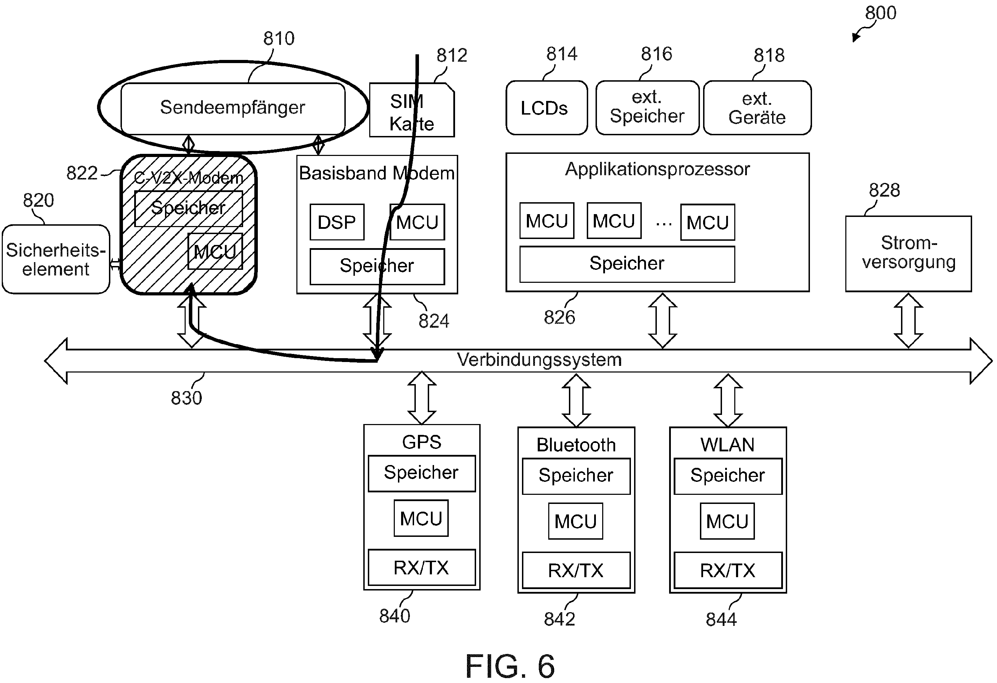

Fig. 6 zeigt ein weiteres Ausführungsbeispiel einer Kommunikationseinrichtung 800 mit verbundenen Sendeempfängern für lokale Einrichtungen, die als GPS Modul 840, Bluetooth Modul 842 und als WLAN Modul 844 ausgeführt sind. Die Verbindung zur Kommunikationseinrichtung 800 ist über ein Verbindungssystem 830 (interconnect system) hergestellt, das beispielsweise als internes Bussystem ausgebildet sein kann.

Die Kommunikationseinrichtung 800 umfasst einen Sendeempfänger 810 (Cellular RF (Radio Frequency) Receiver) zum Senden und Empfangen von Radiosignalen gemäß der Standards und Frequenzbändern der 2. - 5. Generation des zellularen Mobilfunks. Der Sendeempfänger 810 ist gekoppelt mit einem C-V2X Modem 822, das einen Speicher (Memory) und einen Prozessor (MCU) umfasst zur Aufbereitung der Sendeempfangssignale gemäß dem jeweiligen Mobilfunkstandard.

Das C-V2X Modem 822 ist seinerseits gekoppelt mit einem Sicherheitselement (secure element) 820 zur Ablage von sicherheitsrelevanten Daten, die gegen unbefugtes Auslesen geschützt sind. Weiter ist das C-V2X Modem 822 mit dem Verbindungssystem 830 gekoppelt. Der Sendeempfänger 810 ist weiter gekoppelt mit einem Modem 824 für die Verarbeitung von Signalen gemäß den Standards der 2. - 5. Generation des zellularen Mobilfunks. Das Modem 824 umfasst einen digitalen Signalprozessor (DSP), einen weiteren Prozessor (MCU) sowie einen Speicher (Memory). Das C-V2X Modem 822, der Cellular RF Receiver 810, und das Baseband Modem 824 entsprechen dem Sendeempfänger 12 und den Komponenten 610, 620, 630, 640, 670 aus Fig. 5. Weiter umfasst die Kommunikationseinrichtung 800 eine SIM (Subcriber Identity Module) Card 812 im zugehörigen Lesegerät zur Unterstützung der Kommunikationsfunktionen, eine oder mehrere Anzeigeeinheiten 814 (LCDs), einen externen Speicher 816 (Ext. Mem) sowie eine Anschlussmöglichkeit externer Geräte 818 (Peripherals). Ein Applikationsprozessor 826 umfasst mehrere Prozessoren (MCU) sowie Speicher (Memory). Er ist mit dem Verbindungssystem 830 gekoppelt. Eine Stromversorgung 828 ist ebenfalls mit dem Verbindungssystem 830 gekoppelt.

Das GPS Modul 840, das Bluetooth Modul 842 und das WLAN Modul 844 umfassen jeweils einen Speicher (Memory), einen Prozessor (MCU) sowie ein Sendeempfangsmodul nach dem entsprechenden Standard.

In der Fig. 6 deuten die Pfeile das Verfahren in einem Ausführungsbeispiel an. Dabei wird das C-V2X Modem 822 für Umfeldkommunikation (direkte Kommunikation) gemäß Abstimmung mit einem Netzbetreiber über SIM Credentials (auf der SIM-Karte gespeicherte Kennungen) konfiguriert. Der Cellular RF Transceiver (Modem) 810 kann dann gemäß der Fig. 5 modifiziert werden. Ausführungsbeispiele sehen demnach auch eine Erweiterung einer Rundfunkkomponente um die Komponente bi-direktionale Kommunikation auf ISO (International Organization for Standardization) Layer 1-3 vor. In Ausführungsbeispielen kann das Kontrollmodul 14 auch eine bidirektionale Kommunikation zwischen der Kommunikationseinrichtung 10 und dem zumindest einem fahrzeugnahen Mobilgerät 300/310 oder zwischen fahrzeugnahen Mobilgeräten 300/310 des Mobilfunksystems veranlassen, beispielsweise basierend auf einer Bitübertragungsschicht, einer Sicherungsschicht und/oder einer Vermittlungsschicht gemäß dem Open Systems Interconnection -OSI- Model. Das Kontrollmodul 14 kann eine bidirektionale Kommunikation zwischen der Kommunikationseinrichtung 10 und dem zumindest einem fahrzeugnahen Mobilgerät 300/310 oder zwischen fahrzeugnahen Mobilgeräten 300/310 des Mobilfunksystems basierend auf einer Transportschicht, einer Sitzungsschicht und/oder einer Darstellungsschicht gemäß dem Open Systems Interconnection -OSI- Model veranlassen. Alternativ kann bidirektionale Kommunikation auch auf höheren ISO/OSI Schichten unabhängig vom zugrundeliegenden Mobilfunkstandard realisiert werden.

Dazu können dedizierte Ressourcen abhängig von der benötigten Datenrate und dem gewünschten QoS allokiert und dediziert für eine bestimmte Funkverbindung zwischen zwei Teilnehmern vereinbart werden. In Ausführungsbeispielen kann eine Datenrate als Übertragungsgeschwindigkeit oder Übertragungsrate verstanden werden. Es handelt sich dabei um die Anzahl der Informationseinheiten, die in einer bestimmten Zeit über das Übertragungsmedium, über eine Schnittstelle oder über einen Übertragungskanal übertragen werden. In Ausführungsbeispielen kann QoS (Quality of Service) als die Güte eines Kommunikationsdienstes aus der Sicht der Anwender verstanden werden. Sie gibt an, wie stark die Güte des Dienstes mit dessen Anforderungen übereinstimmt. Dabei besteht in Ausführungsbeispielen QoS aus einer Vielzahl von Qualitätsanforderungen an das gemeinsame Verhalten beziehungsweise Zusammenwirken von mehreren Einheiten.

In Ausführungsbeispielen können Ressourcen des zweiten Frequenzbandes des Mobilfunksystems beispielsweise in Abhängigkeit einer Datenrate und/oder eines Quality des Services -QoS- zugeordnet werden. Die Nutzung von Frequenzen der Mobilfunkbetreiber für In-Fahrzeug Kommunikation kann auch die Anbindung von Diensten der Mobilfunkbetreiber erlauben. Die Kommunikationseinrichtung 10 kann demnach ausgebildet sein, um dem zumindest einen Mobilgerät 300, 310 in seinem Umfeld die Nutzung von Diensten (Sprachdienste, Videodienste, Datendienste) des Mobilfunksystems zu ermöglichen.

Beispielsweise kann die im 3GPP Standard schon vorhandene Übertragung über abgesicherte Verbindungen (Encryption, auch Verschlüsselung genannt, sowie Authentifizierung) auch die Kommunikation sensitiver Inhalte und Betrieb systemkritischer Funktionen über eine Funkschnittstelle erlauben. Hierzu kann in Ausführungsbeispielen das Authentifizierungssystem der Direktkommunikation genutzt und mit der Möglichkeit erweitert werden, über den Netzwerkbetreiber temporär und lokal begrenzt Zertifikate zu Absicherung der Kommunikation zu erhalten. In Ausführungsbeispielen kann ein Absicherungsmittel für die bidirektionale Kommunikation eine Authentifizierungsfunktion und/oder eine Verschlüsselungsfunktion umfassen. Das Kontrollmodul 14 kann dann ausgebildet sein, um eine zeitlich und/oder örtlich begrenzte Vereinbarung von Zertifikaten zur Absicherung der Kommunikation zu ermöglichen.

In Ausführungsbeispielen kann eine Authentifizierung ein Nachweis (Verifizierung) einer behaupteten Eigenschaft einer Entität sein, die beispielsweise als Gerät ausgeführt sein kann. Dabei wird durch einen geeigneten Vorgang, dem in Ausführungsbeispielen ein geheimer Schlüssel zu Grunde liegen kann, die Verifizierung der behaupteten Eigenschaft durchgeführt. Die Eigenschaft kann eine Identität des Gerätes sein. In Ausführungsbeispielen kann eine Verschlüsselung als die von einem Schlüssel abhängige Umwandlung von "Klartext" genannten Daten in einen "Geheimtext" ausgebildet sein, so dass der Klartext aus dem Geheimtext nur unter Hinzuziehung eines geheimen Schlüssels wiedergewonnen werden kann. So können Daten gegenüber unberechtigtem Zugriff geschützt werden.

In Ausführungsbeispielen kann ein Zertifikat als ein digitaler Datensatz verstanden werden, der bestimmte Eigenschaften von Personen oder Objekten bestätigt und dessen Authentizität und Integrität durch kryptografische Verfahren geprüft werden kann. Das Zertifikat enthält insbesondere die zu seiner Prüfung erforderlichen Daten. Die Ausstellung eines Zertifikats erfolgt durch eine Zertifizierungseinheit. In weiteren Ausführungsbeispielen kann ein Authentifizierungsbackend als eine Einrichtung verstanden werden, die in gesicherter Umgebung eine lokale Authentifizierung durchführt und das Ergebnis zum Vergleich mit einer fernen Authentifizierungsoperation bereithält.

Ausführungsbeispiele schaffen ferner ein Computerprogramm zur Durchführung zumindest eines der oben beschriebenen Verfahren, wenn das Computerprogramm auf einem Computer, einem Prozessor oder einer programmierbaren Hardwarekomponente abläuft. Ausführungsbeispiele stellen auch ein digitales Speichermedium bereit, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Er-findung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computer-prozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele als Programm, Firmware, Computerprogramm oder Computerprogrammprodukt mit einem Programmcode oder als Daten implementiert sein, wobei der Programmcode oder die Daten dahin gehend wirksam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Beispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeitenden Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien dar. Es versteht sich, dass Modifikationen und Variationen der hierin beschriebenen Anordnungen und Einzelheiten anderen Fachleuten einleuchten werden. Deshalb ist beabsichtigt, dass der Schutzumfang der nachstehenden Patentansprüche nicht durch die spezifischen Einzelheiten, die anhand der Beschreibung und der Erläuterung der Ausführungsbeispiele hierin präsentiert wurden, beschränkt sei.

### Bezugszeichenliste

- 10: Kommunikationseinrichtung
- 12: Sendeempfänger
- 14: Kontrollmodul
- 20: Kontrollkomponente
- 22: Sendeempfänger
- 24: Kontrollmodul
- 100: Fahrzeug
- 200: Basisstation, Netzwerk Controller und/oder Server
- 300: Mobilgerät
- 310: Mobilgerät
- 400: Verfahren für eine Kommunikationseinrichtung
- 410: Kommunikation in dem Mobilfunksystem
- 420: Kommunikation in dem Mobilfunksystem
- 500: Verfahren für eine Kontrollkomponente
- 510: Kommunikation in dem Mobilfunksystem
- 600: Blockschaltbild
- 610: digitales 2G-5G Modem
- 620: Sendeempfänger
- 630: digitale C-V2X Modem
- 640: Sendeempfänger
- 650: Frontend 2G-5G
- 660: Frontend C-V2X
- 670: Frontend 2G-5G und C-V2X
- 800: Kommunikationseinrichtung
- 810: Sendeempfänger
- 812: SIM Karte
- 814: Display
- 816: externer Speicher
- 818: Anschlussmöglichkeit externer Geräte
- 820: Sicherheitselement
- 822: C-V2X Modem
- 824: 2. - 5. G Modem
- 826: Applikationsprozessor
- 828: Stromversorgung
- 830: Verbindungssystem
- 840: GPS Modul
- 842: Bluetooth Modul
- 844: WLAN Modul
- 1000: Anfrage der Kommunikationseinrichtung nach dem zweiten Frequenzband
- 1100: Empfang einer Bestätigung einer Zuteilung des zweiten Frequenzbandes
- 1200: Kommunikation der Konfiguration für die lokale drahtlose Kommunikation in dem zweiten Frequenzband an zumindest ein fahrzeugnahes Mobilgerät
- 1300: Kommunikation zwischen Mobilgerät und Kommunikationseinrichtung
- 1310: Kommunikation zwischen Kommunikationseinrichtung und Mobilgerät
- 1400: Kommunikation zwischen Mobilgeräten

## Patentansprüche

1. Kommunikationseinrichtung (10) zur Konfiguration einer lokalen drahtlosen Kommunikation zwischen der Kommunikationseinrichtung (10) und einem fahrzeugnahen Mobilgerät (300, 310) oder zwischen fahrzeugnahen Mobilgeräten (300, 310) eines Mobilfunksystems, umfassend
einen Sendeempfänger (12), der zur Kommunikation mit einer Kontrollkomponente (20) des Mobilfunksystems ausgebildet ist;
ein Kontrollmodul (14), das mit dem Sendeempfänger (12) gekoppelt ist und zur Kontrolle des Sendeempfängers (12) ausgebildet ist, wobei das Kontrollmodul (14) ferner ausgebildet ist, um in dem Mobilfunksystem in einem ersten Frequenzband zu kommunizieren, um eine Konfiguration eines zweiten Frequenzbandes des Mobilfunksystems für die lokale drahtlose Kommunikation zu erhalten; und wobei das Kontrollmodul (14) ferner ausgebildet ist, um
die Konfiguration für die lokale drahtlose Kommunikation in dem zweiten Frequenzband an zumindest ein fahrzeugnahes Mobilgerät (300, 310) des Mobilfunksystems weiter zu kommunizieren (1200),
wobei das erste Frequenzband und das zweite Frequenzband für bi-direktionale Kommunikation ausgelegt sind.

2. Kommunikationseinrichtung (10) nach Anspruch 1, wobei
die Kommunikation eine Anfrage (1000) der Kommunikationseinrichtung (10) bei der Kontrollkomponente (20) nach dem zweiten Frequenzband und einen Empfang einer Bestätigung (1100) einer Zuteilung des zweiten Frequenzbandes von der Kontrollkomponente (20) umfasst.

3. Kommunikationseinrichtung (10) nach einem der vorherigen Ansprüche, wobei durch eine vorangegangene Subskription bei einem zellularen Mobilfunkanbieter das zweite Frequenzband zumindest zum Teil vorbestimmt ist.

4. Kommunikationseinrichtung (10) nach einem der vorherigen Ansprüche, wobei das fahrzeugnahe Mobilgerät (300, 310) im Fahrzeug (100) angeordnet ist, oder außerhalb des Fahrzeugs (100) innerhalb einer Fahrzeug-zu-Fahrzeug-Kommunikationsreichweite einer PC5 Schnittstelle angeordnet ist.

5. Kommunikationseinrichtung (10) nach einem der vorherigen Ansprüche, wobei das erste und das zweite Frequenzband der zellularen Mobilfunkstandards vom 3GPP LTE Standard genutzte Frequenzbänder sind.

6. Kommunikationseinrichtung (10) nach einem der vorherigen Ansprüche, wobei das Kontrollmodul (14) weiter ausgebildet ist, um eine direkte Kommunikation zwischen der Kommunikationseinrichtung (10) und dem zumindest einen fahrzeugnahen Mobilgerät (300, 310) oder zwischen zumindest zwei fahrzeugnahen Mobilgeräten (300, 310) des Mobilfunksystems unter Verwendung des zweiten Frequenzbandes zu konfigurieren.

7. Kommunikationseinrichtung (10) nach einem der vorherigen Ansprüche, wobei das Kontrollmodul (14) weiter ausgebildet ist, um die Nutzung des zweiten Frequenzbandes des zellularen Mobilfunkstandards in der zulässigen Sendeleistung, zeitlich und/oder räumlich zu beschränken.

8. Kommunikationseinrichtung (10) nach einem der vorherigen Ansprüche, wobei Sendeempfänger (12) oder das Kontrollmodul (14) ausgelegt ist, um dem zumindest einem Mobilgerät (300, 310) in seinem Umfeld die Nutzung von Diensten des Mobilfunksystems zu ermöglichen.

9. Kommunikationseinrichtung (10) nach einem der vorherigen Ansprüche, wobei die Kommunikationseinrichtung (10) zum Betrieb gemäß dem zellularen Fahrzeug zu Entität -C-V2X- Standard ausgebildet ist und in einem Fahrzeug (100) angeordnet ist, und wobei die Kommunikationseinrichtung (10) ein Absicherungsmittel für eine bidirektionale Kommunikation, eine Authentifizierungsfunktion und/oder eine Verschlüsselungsfunktion umfasst.

10. Kontrollkomponente (20) eines Mobilfunksystems zur Konfiguration einer lokalen drahtlosen Kommunikation zwischen einer Kommunikationseinrichtung (10) und fahrzeugnahen Mobilgeräten (300, 310) oder zwischen fahrzeugnahen Mobilgeräten (300, 310) eines Mobilfunksystems, umfassend
einen Sendeempfänger (22), der zur Kommunikation mit der Kommunikationseinrichtung (10) des Mobilfunksystems ausgebildet ist;
ein Kontrollmodul (24), das mit dem Sendeempfänger (22) gekoppelt ist und zur Kontrolle des Sendeempfängers (22) ausgebildet ist, wobei das Kontrollmodul (24) ferner ausgebildet ist,
um in dem Mobilfunksystem in einem ersten Frequenzband zu kommunizieren, um eine Konfiguration eines zweiten Frequenzbandes des Mobilfunksystems für die lokale drahtlose Kommunikation zu übermitteln zur Nutzung von der Kommunikationseinrichtung mit zumindest einem fahrzeugnahen Mobilgerät (300, 310) oder zwischen fahrzeugnahen Mobilgeräten (300, 310), wobei das Kontrollmodul (24) ferner zur Weiterleitung der Konfiguration für die lokale drahtlose Kommunikation in dem zweiten Frequenzband an zumindest ein fahrzeugnahes Mobilgerät (300, 310) des Mobilfunksystems ausgebildet ist, wobei die Weiterleitung über ein Kontrollmodul (14) der Kommunikationseinrichtung (10) erfolgt,
wobei das erste Frequenzband und das zweite Frequenzband für bi-direktionale Kommunikation ausgelegt sind.

11. Kontrollkomponente (20) nach Anspruch 10, wobei das Kontrollmodul (24) ausgebildet ist, um Ressourcen des zweiten Frequenzbandes des Mobilfunksystems in Abhängigkeit einer Datenrate und/oder eines Quality des Services -QoS- zugeordnet werden.

12. Kontrollkomponente (20) nach Anspruch 10 oder11, wobei Kontrollkomponente des Mobilfunknetzes als Basisstation, als Netzwerk Controller und/oder als Server ausgebildet ist.

13. Verfahren (400) für eine Kommunikationseinrichtung (10) zur Konfiguration einer lokalen drahtlosen Kommunikation (1300, 1310, 1400) zwischen der Kommunikationseinrichtung (10) und einem fahrzeugnahen Mobilgerät (300, 310) oder fahrzeugnahen Mobilgeräten (300, 310) eines Mobilfunksystems, bei dem
die Kommunikationseinrichtung (10) mittels einer Kommunikation (410) in dem Mobilfunksystem in einem ersten Frequenzband eine Konfiguration eines zweiten Frequenzbandes des Mobilfunksystems für die lokale drahtlose Kommunikation erhält; und
die Kommunikationseinrichtung (10) mittels einer Kommunikation (420, 1200) die Konfiguration für die lokale drahtlose Kommunikation in dem zweiten Frequenzband an zumindest ein fahrzeugnahes Mobilgerät (300, 310) des Mobilfunksystems übermittelt,
wobei das erste Frequenzband und das zweite Frequenzband für bi-direktionale Kommunikation ausgelegt sind.

14. Verfahren (500) für eine Kontrollkomponente (20) des Mobilfunksystems zur Konfiguration einer lokalen drahtlosen Kommunikation zwischen einer Kommunikationseinrichtung (10) und fahrzeugnahen Mobilgeräten (300, 310, 1300, 1310) oder zwischen fahrzeugnahen Mobilgeräten (300, 310, 1400) eines Mobilfunksystems, bei dem
die Kontrollkomponente (20) mittels einer Kommunikation (510) in dem Mobilfunksystem in einem ersten Frequenzband zur Konfiguration eines zweiten Frequenzbandes des Mobilfunksystems für die lokale drahtlose Kommunikation von der Kommunikationseinrichtung (10) mit zumindest einem fahrzeugnahen Mobilgerät (300, 310) oder zwischen fahrzeugnahen Mobilgeräten (300, 310) die Konfiguration für die lokale drahtlose Kommunikation in dem zweiten Frequenzband an zumindest ein fahrzeugnahes Mobilgerät (300, 310) des Mobilfunksystems übermittelt, wobei die Kommunikation der Konfiguration über ein Kontrollmodul (14) der Kommunikationseinrichtung (10) erfolgt,
wobei das erste Frequenzband und das zweite Frequenzband für bi-direktionale Kommunikation ausgelegt sind.

15. Computerprogramm mit einem Programmcode zum Durchführen zumindest eines der Verfahren gemäß einem der Ansprüche 13 oder 14, wenn der Programmcode auf einem Computer, einem Prozessor, einem Kontrollmodul oder einer programmierbaren Hardwarekomponente ausgeführt wird.

## Claims

1. A communication device (10) for configuring local wireless communication between the communication device (10) and a mobile device (300, 310) close to a vehicle or between mobile devices (300, 310) of a mobile radio system, that are close to a vehicle, comprising
a transceiver (12) designed to communicate with a control component (20) of the mobile radio system;
a control module (14) coupled to the transceiver (12) and designed to control the transceiver (12), wherein the control module (14) is further designed to communicate in the mobile radio system in a first frequency band to obtain a configuration of a second frequency band of the mobile radio system for local wireless communication; and wherein the control module (14) is further designed to communicate (1200) the configuration for the local wireless communication in the second frequency band to at least one mobile device (300, 310) of the mobile radio system, that is close to a vehicle,
wherein the first frequency band and the second frequency band are designed for bi-directional communication.

2. The communication device (10) according to claim 1, wherein
the communication comprises a request (1000) of the communication device (10) to the control component (20) for the second frequency band and a receipt of a confirmation (1100) of an allocation of the second frequency band from the control component (20).

3. The communication device (10) according to either of the preceding claims, wherein
the second frequency band is at least partially predetermined by a previous subscription to a cellular mobile radio provider.

4. The communication device (10) according to any of the preceding claims, wherein
the mobile device (300, 310) close to the vehicle is arranged in the vehicle (100), or is arranged outside the vehicle (100) within a vehicle-to-vehicle communication range of a PC5 interface.

5. The communication device (10) according to any of the preceding claims, wherein
the first and second frequency bands of the cellular mobile radio standards are frequency bands used by the 3GPP LTE standard.

6. The communication device (10) according to any of the preceding claims, wherein
the control module (14) is further designed to configure direct communication between the communication device (10) and the at least one mobile device (300, 310) close to a vehicle or between at least two mobile devices (300, 310) of the mobile radio system, that are close to a vehicle, which use the second frequency band.

7. The communication device (10) according to any of the preceding claims, wherein
the control module (14) is further designed to limit the use of the second frequency band of the cellular mobile radio standard in terms of the permissible transmission power in time and/or space.

8. The communication device (10) according to any of the preceding claims, wherein
the transceiver (12) or the control module (14) is designed to enable the at least one mobile device (300, 310) to use, in its environment, services of the mobile radio system.

9. The communication device (10) according to any of the preceding claims, wherein
the communication device (10) is designed for operation according to the cellular vehicle -to-entity -C-V2X- standard and is arranged in a vehicle (100), and wherein the communication device (10) comprises a securing means for bidirectional communication, an authentication function and/or an encryption function.

10. A control component (20) of a mobile radio system for configuring local wireless communication between a communication device (10) and mobile devices (300, 310) close to a vehicle or between mobile devices (300, 310) of a mobile radio system, that are close to a vehicle, comprising
a transceiver (22) designed to communicate with the communication device (10) of the mobile radio system;
a control module (24) coupled to the transceiver (22) and designed for controlling the transceiver (22), wherein the control module (24) is further designed to communicate in the mobile radio system in a first frequency band in order to transmit a configuration of a second frequency band of the mobile radio system for local wireless communication for use by the communication device with at least one mobile device (300, 310) close to the vehicle or between mobile devices (300, 310) close to the vehicle, wherein the control module (24) is further designed for forwarding the configuration for the local wireless communication in the second frequency band to at least one mobile device (300, 310) of the mobile radio system, that is close to the vehicle, wherein the forwarding takes place via a control module (14) of the communication device (10),
wherein the first frequency band and the second frequency band are designed for bi-directional communication.

11. The control component (20) according to claim 10, wherein the
control module (24) is designed to allocate resources of the second frequency band of the mobile radio system as a function of a data rate and/or a quality of service -QoS-.

12. The control component (20) according to claim 10 or 11, wherein
the control component of the mobile radio network is designed as a base station, a network controller and/or a server.

13. A method (400) for a communication device (10) for configuring a local wireless communication (1300, 1310, 1400) between the communication device (10) and a mobile device (300, 310) close to a vehicle or mobile devices (300, 310) of a mobile radio system, that are close to a vehicle, in which the communication device (10) obtains a configuration of a second frequency band of the mobile radio system for the local wireless communication by means of a communication (410) in the mobile radio system in a first frequency band; and
the communication device (10) transmits the configuration for local wireless communication in the second frequency band to at least one mobile device (300, 310) of the mobile radio system, that is close to the vehicle, by means of a communication (420, 1200),
wherein the first frequency band and the second frequency band are designed for bi-directional communication.

14. A method (500) for a control component (20) of the mobile radio system for configuring local wireless communication between a communication device (10) and mobile devices (300, 310, 1300, 1310) close to a vehicle or between mobile devices (300, 310, 1400) of a mobile radio system, that are close to a vehicle, in which
the control component (20), by means of a communication (510) in the mobile radio system in a first frequency band, in order to configure a second frequency band of the mobile radio system for the local wireless communication by the communication device (10) with at least one mobile device (300, 310) close to the vehicle or between mobile devices (300, 310) close to the vehicle, transmits the configuration for local wireless communication in the second frequency band to at least one mobile device (300, 310) close to the vehicle of the mobile radio system, wherein the configuration is communicated via a control module (14) of the communication device (10),
wherein the first frequency band and the second frequency band are designed for bi-directional communication.

15. A computer program comprising a program code for performing at least one of the methods according to either of claims 13 or 14 when the program code is executed on a computer, a processor, a control module or a programmable hardware component.

## Revendications

1. Dispositif de communication (10) destiné à configurer une communication locale sans fil entre le dispositif de communication (10) et un appareil mobile (300, 310) proche d'un véhicule ou entre des appareils mobiles (300, 310) proches d'un véhicule, d'un système de téléphonie mobile, comprenant
un émetteur-récepteur (12) conçu pour communiquer avec un composant de commande (20) du système de téléphonie mobile ;
un module de commande (14) couplé à l'émetteur-récepteur (12) et conçu pour commander l'émetteur-récepteur (12), le module de commande (14) étant en outre conçu pour communiquer dans le système de téléphonie mobile dans une première bande de fréquences afin d'obtenir une configuration d'une deuxième bande de fréquences du système de téléphonie mobile pour la communication locale sans fil ; et le module de commande (14) étant en outre conçu pour transmettre (1200) la configuration pour la communication locale sans **fil** dans la deuxième bande de fréquences à au moins un appareil mobile (300, 310) proche du véhicule, du système de téléphonie mobile,
la première bande de fréquences et la deuxième bande de fréquences étant conçues pour une communication bidirectionnelle.

2. Dispositif de communication (10) selon la revendication 1, la communication comprenant une demande (1000) du dispositif de communication (10) auprès du composant de commande (20) pour la deuxième bande de fréquences et la réception d'une confirmation (1100) d'une attribution de la deuxième bande de fréquences par le composant de commande (20).

3. Dispositif de communication (10) selon l'une des revendications précédentes, la deuxième bande de fréquences étant au moins en partie prédéterminée par une souscription préalable auprès d'un opérateur de téléphonie mobile cellulaire.

4. Dispositif de communication (10) selon l'une des revendications précédentes, l'appareil mobile (300, 310) proche du véhicule étant disposé dans le véhicule (100) ou à l'extérieur du véhicule (100) à une portée de communication inter-véhicules d'une interface PC5.

5. Dispositif de communication (10) selon l'une des revendications précédentes, la première bande de fréquences et la deuxième bande de fréquences utilisées par les normes de téléphonie mobile cellulaire étant des bandes de fréquences utilisées par la norme 3GPP LTE.

6. Dispositif de communication (10) selon l'une des revendications précédentes, le module de commande (14) étant en outre conçu pour configurer une communication directe entre le dispositif de communication (10) et l'au moins un appareil mobile (300, 310) proche du véhicule ou entre au moins deux appareils mobiles (300, 310) proches du véhicule, du système de téléphonie mobile au moyen de la deuxième bande de fréquences.

7. Dispositif de communication (10) selon l'une des revendications précédentes, le module de commande (14) étant en outre conçu pour limiter l'utilisation de la deuxième bande de fréquences de la norme de téléphonie mobile cellulaire à la puissance d'émission autorisée dans le temps et/ou dans l'espace.

8. Dispositif de communication (10) selon l'une des revendications précédentes, l'émetteur-récepteur (12) ou le module de commande (14) étant conçu pour permettre à l'au moins un appareil mobile (300, 310) situé dans son environnement d'utiliser les services du système de téléphonie mobile.

9. Dispositif de communication (10) selon l'une des revendications précédentes, le dispositif de communication (10) étant conçu pour fonctionner conformément à la norme cellulaire C-V2X véhicule-à-entité et étant disposé dans un véhicule (100), et le dispositif de communication (10) comprenant un moyen de sécurisation pour une communication bidirectionnelle, une fonction d'authentification et/ou une fonction de cryptage.

10. Composant de commande (20) d'un système de téléphonie mobile destiné à configurer une communication locale sans fil entre un dispositif de communication (10) et des appareils mobiles (300, 310) proches d'un véhicule ou entre des appareils mobiles (300, 310) proches d'un véhicule, d'un système de téléphonie mobile, comprenant
un émetteur-récepteur (22) conçu pour communiquer avec le dispositif de communication (10) du système de téléphonie mobile ;
un module de commande (24) couplé à l'émetteur-récepteur (22) et conçu pour commander l'émetteur-récepteur (22), le module de commande (24) étant en outre conçu pour communiquer dans le système de téléphonie mobile dans une première bande de fréquences afin de transmettre une configuration d'une deuxième bande de fréquences du système de téléphonie mobile pour la communication locale sans fil à utiliser par le dispositif de communication avec au moins un appareil mobile (300, 310) proche du véhicule ou entre des appareils mobiles (300, 310) proches du véhicule, le module de commande (24) étant en outre conçu pour transmettre la configuration pour la communication locale sans fil dans la deuxième bande de fréquences à au moins un appareil mobile (300, 310) proche du véhicule (300, 310) du système de téléphonie mobile, la transmission s'effectuant via un module de commande (14) du dispositif de communication (10),
la première bande de fréquences et la deuxième bande de fréquences étant conçues pour une communication bidirectionnelle.

11. Composant de commande (20) selon la revendication 10, le module de commande (24) étant conçu pour attribuer des ressources de la deuxième bande de fréquences du système de téléphonie mobile en fonction d'un débit de données et/ou d'une qualité de service (QoS).

12. Composant de commande (20) selon la revendication 10 ou 11, le composant de commande du réseau de téléphonie mobile étant conçu sous la forme d'une station de base, d'un contrôleur de réseau et/ou d'un serveur.

13. Procédé (400) pour un dispositif de communication (10) destiné à configurer une communication (1300, 1310, 1400) locale sans fil entre le dispositif de communication (10) et un appareil mobile (300, 310) proche d'un véhicule ou des appareils mobiles (300, 310) proches d'un véhicule, d'un système de téléphonie mobile, le dispositif de communication (10) recevant, au moyen d'une communication (410) dans le système de téléphonie mobile dans une première bande de fréquences, une configuration d'une deuxième bande de fréquences du système de téléphonie mobile pour la communication locale sans fil locale ; et
le dispositif de communication (10) transmettant, au moyen d'une communication (420, 1200), la configuration pour la communication locale sans fil dans la deuxième bande de fréquences à au moins un appareil mobile (300, 310) proche du véhicule, du système de communication mobile,
la première bande de fréquences et la deuxième bande de fréquences étant conçues pour une communication bidirectionnelle.

14. Procédé (500) pour un composant de commande (20) du système de téléphonie mobile destiné à configurer une communication locale sans **fil** entre un dispositif de communication (10) et des appareils mobiles (300, 310, 1300, 1310) ou entre des appareils mobiles (300, 310, 1400) proches d'un véhicule, d'un système de téléphonie mobile,
le composant de commande (20) transmettant, au moyen d'une communication (510) dans le système de téléphonie mobile dans une première bande de fréquences, pour configurer une deuxième bande de fréquences du système de téléphonie mobile pour la communication locale sans **fil** entre le dispositif de communication (10) et au moins un appareil mobile (300, 310) proche du véhicule ou entre des appareils mobiles (300, 310) proches du véhicule, la configuration pour la communication locale sans **fil** dans la deuxième bande de fréquences à au moins un appareil mobile (300, 310) proche du véhicule du système de téléphonie mobile, la communication de la configuration s'effectuant via un module de commande (14) du dispositif de communication (10),
la première bande de fréquences et la deuxième bande de fréquences étant conçues pour une communication bidirectionnelle.

15. Programme informatique doté d'un code de programme permettant d'exécuter au moins l'un des procédés selon l'une des revendications 13 ou 14, lorsque le code de programme est exécuté sur un ordinateur, un processeur, un module de commande ou un composant matériel programmable.
